Europäisches Patentamt

European Patent Office

Office européen des brevets

(19)

(11) Veröffentlichungsnummer: **0 233 532**
**B1**

(12) **EUROPÄISCHE PATENTSCHRIFT**

(45) Veröffentlichungstag der Patentschrift: **13.06.90**

(21) Anmeldenummer: **87101377.7**

(22) Anmeldetag: **02.02.87**

(51) Int. Cl.⁵: **F 16 H 37/02, F 16 H 57/08**

(54) Planetenräder-Umschaltgetriebe, insbesondere für ein stufenlos regelbares Umschlingungsgetriebe für Kraftfahrzeuge.

(30) Priorität: **05.02.86 DE 3603401**

(43) Veröffentlichungstag der Anmeldung:
**26.08.87 Patentblatt 87/35**

(45) Bekanntmachung des Hinweises auf die Patenterteilung:
**13.06.90 Patentblatt 90/24**

(84) Benannte Vertragsstaaten:
**BE DE ES FR GB IT NL SE**

(56) Entgegenhaltungen:
**DD-A- 131 873**
**DE-A-3 407 613**
**DE-C-1 126 212**
**DE-C-3 241 789**

(73) Patentinhaber: **FORD-WERKE AKTIENGESELLSCHAFT**
**Werk Köln-Niehl Henry-Ford-Strasse Postfach 60 40 02**
**D-5000 Köln 60 (DE)**
(84) **BE DE IT NL SE**

(73) Patentinhaber: **FORD MOTOR COMPANY LIMITED**
**Eagle Way**
**Brentwood Essex CM13 3BW (GB)**
(84) **GB**

(73) Patentinhaber: **FORD FRANCE SOCIETE ANONYME**
**344 Avenue Napoléon Bonaparte B.P. 307**
**F-92506 Rueil Malmaison Cedex (FR)**
(84) **FR**

(73) Patentinhaber: **Ford Motor Company**
**One Parklane Boulevard Parklane Towers East**
**Dearborn Michigan 48126 (US)**
(84) **ES**

(72) Erfinder: **Svab, Eugen**
**Masurenstrasse 17**
**D-5000 Köln 71 (DE)**

Courier Press, Leamington Spa, England.

EP 0 233 532 B1

**EP 0 233 532 B1**

(74) Vertreter: **Ritzkowsky, Harald, Dipl.-Ing. et al**
**Ford-Werke Aktiengesellschaft Patentabteilung**
**NH/DRP Henry-Ford-Strasse**
**D-5000 Köln 60 (DE)**

**Beschreibung**

Die Erfindung bezieht sich auf ein Planetenräder-Umschaltgetriebe, insbesondere für ein stufenlos regelbares Umschlingungsgetriebe für Kraftfahrzeuge, der im Oberbegriff des Patentanspruchs erläuterten Art.

Aus der DE—C—11 26 212 ist ein Platetenräder-Umschaltgetriebe bekannt, bei dem der Planetenradträger eines zwei Sätze von miteinander in Eingriff stehenden Planetenrädern aufweisenden Planetenradsatzes das Eingangsglied und das Sonnenrad das Ausgangsglied und das Ringrad das Reaktionsglied bilden. Durch Festlegen des Ringrades über eine Reibscheibenkupplung kann ein Rückwärtsgang geschaltet werden und durch Verbinden des Planetenradträgers mit dem Sonnenrad über eine zweite Reibscheibenkupplung kann ein Vorwärtsgang geschaltet werden. Die Reibscheibenkupplungen können hierbei über Zylinder/Kolben-Einheiten hydraulisch betätigt werden.

Die axiale Baulänge des Planetenräder-Umschaltgetriebes ist nicht optimal kurz und das Ringrad ist axial nicht geführt.

Aus der DE—C—32 41 789 ist ein solches Planetenräder-Umschaltgetriebe, insbesondere für ein stufenlos regelbares Umschlingungsgetriebe für Kraftfahrzeuge bekannt. Bei diesem Planetenräder-Umschaltgetriebe sind die Reibscheibenkupplungen als Lamellenkupplungen ausgebildet und insbesondere die den Planetenradträger mit dem Sonnenrad verbindende Vorwärtsgangkupplung muß in aufwendiger Weise durch radiale Bohrungen in verschiedenen Hohlwellen mit dem Druckmittel für die Zylinder/Kolben-Einheit versorgt werden.

Auch hier ist die Baulänge des Planetenräder-Umschaltgetriebes nicht optimal kurz und die Schmierölversorgung der Planetenräder ist schwierig.

In der nicht vorveröffentlichten deutschen Patentansmeldung P 35 38 884.6 ist ein Planetenräder-Unschaltgetriebe, insbesondere für ein stufenlos regelbares Umschlingungsgetriebe für Kraftfahrzeuge vorgeschlagen worden, bei dem im Bereich der Vorwärtsgang-Kupplung noch ein sogenannter Drehmomentfühler angeordnet ist, wodurch zu den bereits vorhandenen Hohlwellen nocht ein weiteres Hülsenteil hinzukommt, über das über radiale Bohrungen die Druckmittelversorgung für die Vorwärtsgangkupplung erfolgen muß.

Hierbei zur Weiterleitung des Druckmittels verwendete axiale Hohlräume müssen hierbei über entsprechende Dichtringe agedichtet werden, die durch ihre Reibung die Feinfühligkeit des Drehmomentfühlers beeinträchtigen.

Die Aufgabe der Erfindung ist es, ein Planetenräder-Umschaltgetriebe, insbesondere für ein stufenlos regelbares Umschlingungsgetriebe für Kraftfahrzeuge der im Oberbegriff des Patentanspruchs erläuterten Art derart zu verbessern, daß bei reduziertem Bauraum eine günstige Druckmittelversorgung der Vorwärtsgangkupplung und eine günstige Schmierölversorgung der Planetenradsätze und der Reibscheibenkupplungen bereitgestellt wird.

Gemäß der Erfindung wird diese Aufgabe gelöst, indem ein Planetenräder-Umschaltgetriebe der im Oberbegriff des Patentanspruchs 1 erläuterten Art die im Kennzeichenteil des Patentanspruchs 1 aufgezeigten Maßnahmen aufweist.

In den Unteransprüchen sind zweckmäßige Maßnahmen zur Verbesserung der Schmierung der Planetenradsatz-Elemente erläutert.

Dadurch, daß die Druckmittelversorgung der Zylinder/Kolben-Einheit der Vorwärtsgangkupplung über ein durch die hohle Pumpenantriebswelle verlaufendes Zuleitungsrohr erfolgt, das eine Mittelbohrung in einem Zapfenteil des Planetenradträgers beaufschlagt, die über radiale Bohrungen im vorderen Planetenradträgerflansch und über axiale Bohrungen im sich axial zwischen den Planetenrädern erstreckenden Stützstegen mit einem Raum benachbart dem Zylinderbauteil in Verbindung steht, der über einen Kanal mit dem Druckraum der Vorwärtsgangkupplung verbunden ist, wird eine Druckmittelversorgung der Vorwärtsgangkupplung bereitgestellt, bei der radiale, Hohlwelle querende Kanalanordnungen vermieden werden.

Dadurch, daß die sich axial erstreckenden Stützstege trapezförmigen Querschnitt aufweisen, können in ihren engen Bereichen Bohrungen für die Befestigungsbolzen des hinteren Planetenradträgerringes vorgesehen und in ihren weiten Bereichen zwei axiale Bohrungen vorgesehen werden, von denen eine für die Druckmittelversorgung der Vorwärtsgangkupplung und die andere für die Schmiermittelversorgung der Reibscheibenkupplungen dient.

Dadurch, daß die die Planetenräder lagernden Planetenradbolzen über eine Sackbohrung und eine radiale Bohrung die Nadellager der Planetenräder mit Schmieröl versorgen, kann das Schmieröl weiter radial nach außen strömen und die das Ringrad axial führenden Anlaufscheiben günstig beaufschlagen. Die das Ringrad axial führenden Anlaufscheiben werden hierbei über ihre, Wölbungen aufweisenden Vorsprünge, an den Anlaufscheiben der Planetenräder zentriert und abgestützt.

Die Erfindung wird anhand eines in den Figuren gezeigten Ausführungsbeispieles näher erläutert.

Es zeigt:

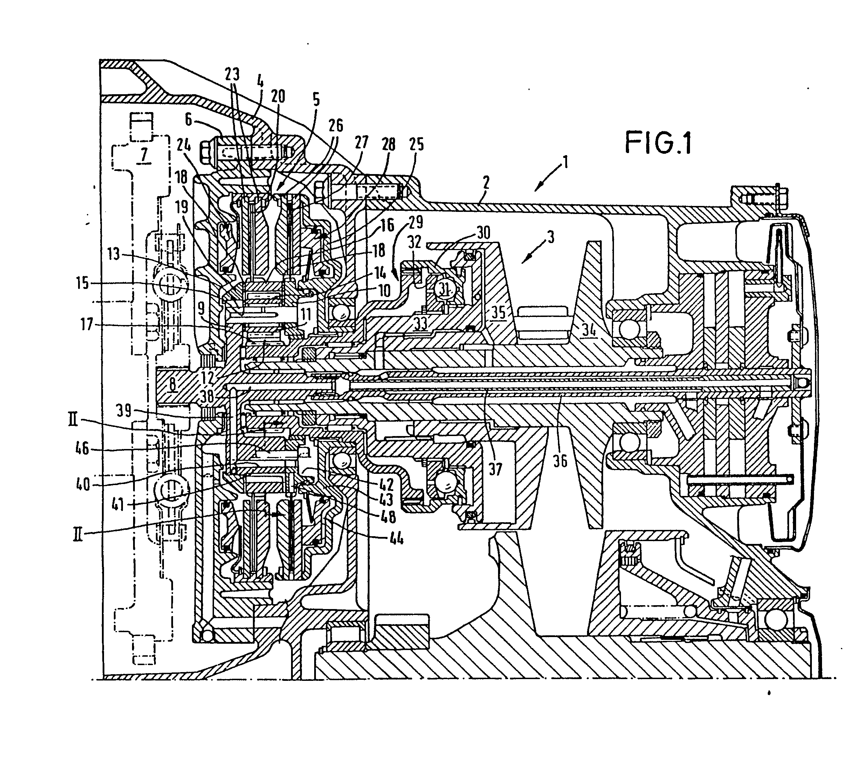

Fig. 1 einen vertikalen Teilschnitt durch ein Planetenräder-Umschaltgetriebe, insbesondere für ein stufenlos regelbares Umschlingungsgetriebe für Kraftfahrzeuge und

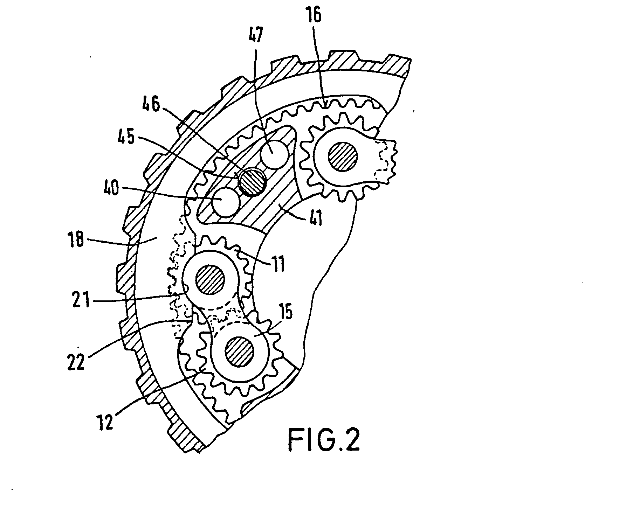

Fig. 2 einen Teilschnitt entlang der Linie II—II in Fig. 1.

In einem Getriebegehäuse 1 ist in einem Gehäuseteil 2 im wesentlichen das stufenlose Umschlingungsgetriebe 3 angeordnet, während in einem Anschlußteil 4 im wesentlichen das Planetenräder-Umschaltgetriebe 5 mit den entsprechenden Reibscheibenkupplungen angeordnet ist. Das Planetenräder-Umschaltgetriebe 5 wird hierbei über ein Deckelteil 6 von der mit dem

Verbrennungsmotor verbundenen Schwungscheiben-Dämpfungscheibenanordnung 7 getrennt.

Die Schwungscheibe-Dämpfungsscheibenanordnung 7 treibt den Zapfenteil eines Planetenradträgers 8, der das Eingangsglied des Planetenräder-Umschaltgetriebes bildet. Der Planetenradträgers 8 weist hierbei einen vorderen Planetenradträgerflanche 9 und einen hinteren Planetenradträgerring 10 auf.

Im Planetenradträger 8 sind zwei miteinander in Eingriff stehende Planetenradsätze 11 und 12 über Planetenradbolzen 13 über Nadellager 14 drehbar gelagert und über Anlaufscheiben 15 axial geführt, wobei der eine Planetenradsatz 11 in Eingriff mit einem Ringrad 16 steht, während der andere Planetenradsatz 12 in Eingriff mit einem Sonnenrad 17 steht.

Das Ringrad 16 ist über Anlaufscheiben 18 axial zwischen dem Planetenradträgerring 10 und einem Planetenradträgerverschlußteil 19 geführt und ist über eine äußere Kerbverzahnung mit einer Reibscheibe 20 treibend verbunden.

Die das Ringrad 16 axial führenden Anlaufscheiben 18 werden hierbei über die zu einer 8-förmigen Anlaufscheibe 15 zusammengefaßten Anlaufscheiben der Planetenräder 11 und 12 über eine entsprechende Wölbung 21 aufweisende innenliegende Vorsprünge 22 radial zentriert und gegen Drehung gesichert.

Kupplungsdruckplatten 23 sind über Verzahnungen im Deckelteil 6 drehfest gehalten und sind über eine Zylinder/Kolben-Einheit 24 beaufschlagbar.

Die Reibscheibe 20 mit den Kupplungsdruckplatten 23 und der Zylinder/Kolben-Einheit 24 bilden hierbei eine sogenannte Rückwärtsgangkupplung, durch die das Ringrad 16 als Reaktionsglied festgehalten werden kann.

Mit dem Sonnenrad 17 ist drehfest ein Zylinderbauteil 25 verbunden, an dem über eine Verzahnung Kupplungsdruckplatten 26 angeordnet sind, die zwischen sich eine Reibscheibe 27 aufnehmen, die über eine Kerbverzahnung mit dem Planetenradträgerring 10 treibend verbunden ist. Die Kupplungsdruckplatten 26 sind hierbei über eine Zylinder/Kolben-Einheit 28 beaufschlagbar.

Die Kupplungsdruckplatten 26 mit der Reibscheibe 27 und der Zylinder/Kolben-Einheit 28 bilden hierbei eine sogenannte Vorwärtsgangkupplung durch die eine relative Drehung zwischen dem Sonnenrad 17 und dem Planetenradträger 8 unerbunden wird, wodurch das Antriebsdrehmoment vom Planetenradträger unmittelbar auf das Sonnenrad 17 übertragen wird.

Das Sonnenrad 17 bildet weiterhin eine Antriebsglocke 29 für das Eingangsglied 30 eines Dehmomentfühlers, der über Kugeln 31 auf ein Ausgangsglied 32 einwirkt, das drehfest mit einem Hülsenteil 33 verbunden ist, das treibend sowohl mit dem feststehenden Kegelscheibenteil 34 als auch mit dem beweglichen Kegelscheibenteil 35 der Primärwelle verbunden ist.

Weitere Einzelheiten und die Funktions des Drehmomentfühlers werden hier nicht erläutert, da sie nicht Gegenstand der Erfindung sind und an sich bereits Gegenstand früherer Anmeldungen sind.

Gemäß der Erfindung erfolgt die Druckmittelversorgung der Vorwärtsgangkupplung über ein in der hohlen Pumpenantriebeswelle 36 verlaufendes Zuleitungsrohr 37, das eine Mittelbohrung 38 im Zapfteil des planetenradträgers 8 beaufschlagt. Von dieser Mittelbohrung 38 wird das Druckmittel über radiale Bohrungen 39 im vorderen Planetenradträgerflansch 9 nach außen geführt und gelangt von da über axiale Bohrungen 40 in sich axial zwischen den Planetenradsätzen 11 und 12 erstreckenden Stützstegen 41 in einem Raum 42 der benachbart dem Zylinderbauteil 25 liegt und über eine Kanal 43 mit dem Druckraum 44 der Zylinder/Kolben-Einheit 28 der Vorwärtsgangkupplung verbunden ist.

Die sich axial erstreckenden Stützstege 41 weisen hierbei einen trapezförmigen Querschnitt auf und können in ihrem engen Bereich Bohrungen 45 für die Befestigungsbolzen 46 des hinteren Planetenradträgerringes 10 aufweisen. In ihrem weiteren Bereich können zwei axiale Bohrungen 40 und 47 vorgesehen werden, von denen die eine Bohrung 40 die Druckmittelversorgung für die Vorwärtsgangkupplung übernimmt, während die andere Bohrung 47 über radiale Bohrungen 48 die Schmierölversorgung der Reibscheiben übernimmt.

Auf diese Weise können insbesondere im Bereich des Drehmomentfühlers zwischen sich relativ verdrehenden Hülsenteilen radiale Druckmittelzuleitungen mir ihren erforderlichen Dichtringen vermieden werden, die die Feinfühligkeit des Drehmomentfühlers beeinträchtigen würden.

Darüberhinaus wird eine geringstmögliche Baulänge erzielt, was insbesondere bei Fronantrieben von gravierender Bedeutung ist.

Weiterhin rückt die Hauptlagerung näher an die Kegelscheiben, wodurch eine bessere Lastverteilung und eine höhere Steifigkeit und Laufruhe erzielt wird.

**Patentansprüche**

1. Planetenräder-Umschaltgetriebe, insbesondere für ein stufenlos regelbares Umschlingungsgetriebe für Kraftfahrzeuge,

mit einem das Eingangsglied bildenden Planetenträger, der aus einem vorderen Planetenradträgerflansch (9) mit einem Zapfenteil und einem hinteren Planetenradträgerring (10) besteht,

einem das Reaktionsglied bildenden Ringrad (16) und

einem das Ausgangsglied bildenden Sonnenrad (17) mit einer Zylinder/Kolben-Einheit mit einem Zylinderbauteil (28) und

zwei hydraulisch schaltbaren Scheibenreibungskupplungen (20/23 und 24) und (26/27 und 28), deren eine das Ringrad (16) am Gehäuse festlegt, um einen Rückwärtsgang zu schalten und deren andere eine Verbindung zwischen dem Planetenträger (8) und dem Sonnenrad (17) bzw. der hohlen Getriebeeingangswelle in der koaxial eine hohle Pumpenantriebswelle läuft herstellt, um einen Vorwärtsgang zu schalten, wobei

die Druckmittelversorgung der Zylinder/Kolben-Einheit mit dem Zylinderbauteil (28) der Vorwärtsgangkupplung über die hohle Pumpenantriebswelle (36) erfolgt, deren Mittelbohrung (38) mit einem Raum benachbart dem Zylinderbauteil des Sonnenrades (17) in Verbindung steht, der über einen Kanal mit dem Druckraum der Vorwärtsgangkupplung verbunden ist, dadurch gekennzeichnet, daß

in der Pumpenantriebswelle (36) ein Zuleitungsrohr (37) verläuft, das eine Mittelbohrung (38) im Zapfenteil des Planetenradträgers (8) beaufschlagt, die über radiale Bohrungen (39) im vorderen Planetenradträgerflansch (9) und über axiale Bohrungen (40) in sich axial zwischen den Planetenrädern erstreckenden Stützstegen (41) mit dem oben genannten Raum in Verbindung steht.

2. Planetenräder-Umschaltgetriebe nach Anspruch 1, dadurch gekennzeichnet, daß

ein sich axial erstreckender Stützsteg (41) des Planetenradträgers (8) der trapezähnlichen Querschnitt aufweist mit der Bohrung (45) für den Befestigungsbolzen (46) des hinteren Planetenradträgerringes (10) in der radialen Symmetrieachse und und zu beiden Seiten davon mit Bohrungen (40, 47) für die Druckmittelversorgung der Vorwärtsgangkupplung und die Schmiermittelversorgung der Reibscheiben versehen ist.

3. Planetenräder-Umschaltgetriebe nach Anspruch 1, dadurch gekennzeichnet, daß die die Planetenräder (11 und 12) lagernden Planetenradbolzen (13) über eine Sackbohrung und eine radiale Bohrung die Nadellager der Planetenräder (11 und 12) mit Schmieröl versorgen.

4. Planetenräder-Umschaltgetriebe nach den Ansprüchen 1 bis 3, dadurch gekennzeichnet, daß die die Planetenräder (11 und 12) axial führenden Anlaufscheiben zu einer 8-förmigen Anlaufscheibe (15) zusammengefaßt sind und die Anlaufscheibe (18) des Ringrades (14) an entsprechende Wölbungen (21) aufweisenden Vorsprüngen (22) radial zentrieren und gegen Drehung sichern.

**Revendications**

1. Boîte de changement de vitesses à train planétaire, en particulier pour une transmission à lien sans fin, réglable en continu, pour véhicules automobiles, comportant:

un porte-satellites formant l'organe d'entrée qui est constitué d'une bride avant (9) de porte-satellites avec un élément d'axe et un anneau arrière (10) de porte-satellites,

une roue annulaire (16) formant l'organe de réaction et

une roue planétaire (17) formant l'organe de sortie avec un vérin comportant un élément cylindrique (28) et

deux embrayages à disque de friction (20/23 et 24) et (26/27 et 28) hydrauliques dont un fixe la roue annulaire (16) sur le carter, afin d'embrayer en marche arrière et dont l'autre constitue une liaison entre le porte-satellites (8) et la roue planétaire (17) ou l'arbre d'entrée creux du changement de vitesses, dans lequel tourne sur le même axe un arbre d'entraînement creux de pompe, afin d'embrayer en marche avant,

le vérin comportant l'élément cylindrique (28) de l'embrayage en marche avant étant alimenté en fluide sous pression, par l'arbre d'entraînement de pompe (36) creux dont l'alésage central (38) communique avec un volume voisin de l'élément cylindrique de la roue planétaire (17), qui est relié au volume sous pression de l'embrayage en marche avant par un conduit, caractérisée en ce que:

dans l'arbre d'entraînement de pompe (36) passe un tube d'arrivée (37) qui alimente un alésage central (38) de l'élément d'axe de porte-satellites (8), qui est relié au volume mentionné ci-dessus, par l'intermédiaire de perçages (39) radiaux pratiqués dans la bride avant (9) du porte-satellites, et par l'intermédiaire de perçages axiaux (40) pratiqués dans des pièces d'appui (41) s'étendant axialement entre les pignons satellites.

2. Boîte de changement de vitesses à train planétaire selon la revendication 1, caractérisée en ce qu'une pièce d'appui (41) axiale du porte-satellites (8) dont la section transversale est trapézoïdale, est pourvue de perçage (45) pour le boulon de fixation (46) de l'anneau arrière (10) du porte-satellites dans l'axe symétrique radial, et des deux côtés, de perçages (40 et 47) pour l'alimentation en fluide sous pression de l'embrayage en marche avant, ainsi que pour l'alimentation en lubrifiant des disques de friction.

3. Boîte de changement de vitesses à trains planétaires selon la revendication 1, caractérisée en ce que les axes porte-satellites (13) supportant les satellites (11 et 12) assurent l'alimentation des roulements à aiguilles des satellites (11 et 12) en lubrifiant par un trou borgne et par un perçage radial.

4. Boîte de changement de vitesses selon les revendications 1 à 3, caractérisée en ce que les disques d'usure guidant axialement les satellites (11 et 12) sont assemblés à un disque d'usure (15) en forme de 8, et les disques d'usure (18) de la roue annulaire (14) sont centrés radialement et empêchés de tourner par leurs saillies (22) présentant des courbures (21).

**Claims**

1. A planetary gear change-speed transmission, in particular for a continuously variable belt-drive transmission for motor vehicles,

having a planetary gear carrier which forms the input member and which comprises a front planetary gear carrier flange (9) with a pin portion and a rear planetary gear carrier ring (10),

a ring gear (16) forming the reaction member, and

a sun gear (17) which forms the output member and which has a piston-cylinder unit with a cylinder component (28), and

two hydraulically engageable friction disc clutches (20/23 and 24) and (26/27 and 28), one of which locks the ring gear (16) on the housing in order to engage a reverse gear and the other of which forms a connexion between the planetary gear carrier (8) and the sun gear (17) or the hollow transmission input shaft respectively, in which a hollow pump drive shaft runs coaxially, in order to engage a forward gear,

the pressure fluid being supplied to the piston-cylinder unit with the cylinder component (28) of the forward gear clutch by way of the hollow pump drive shaft (36), the central bore (38) of which is connected to a space adjacent the cylinder component of the sun gear (17), which [space] is connected by way of a duct to the pressure chamber of the forward gear clutch, characterized in that

a supply pipe (37) extends in the pump drive shaft (36), the supply pipe (37) acting upon a central bore (38) in the pin portion of the planetary gear carrier (8), which [central bore (38)] is connected to the aforesaid space by way of radial bores (39) in the front planetary gear carrier flange (9) and by way of axial bores (40) in support webs (41) extendig axially between the planetary gears.

2. A planetary gear change-speed transmission according to Claim 1, characterized in that an axially extending support web (41) of the planetary gear carrier (8), which has [a] trapezoid cross-section, is provided with the bore (45) for the fastening pin (46) of the rear planetary gear carrier ring (10) in the radial axis of symmetry and and [sic] on both sides thereof with bores (40 and 47) for the pressure fluid supply of the forward gear clutch and the lubricant supply of the friction discs.

3. A planetary gear change-speed transmission according to Claim 1, characterized in that the planetary gear pins (13) supporting the planetary gears (11 and 12) supply the needle bearings of the planetary gears (11 and 12) with lubricating oil by way of a blind-end bore and a radial bore.

4. A planetary gear change-speed transmission according to Claims 1 to 3, characterized in that the thrust washers axially guiding the planetary gears (11 and 12) are combined to form a figure-of-eight thrust washer (15) and radially centre the thrust washer (18) of the ring gear (14) on projections (22) comprising corresponding convex portions (21) and prevent it from rotating.

FIG.1

FIG.2